(19) Europäisches Patentamt
European Patent Office
Office européen des brevets

(11) Veröffentlichungsnummer: **0 190 444**
**B1**

(12) # EUROPÄISCHE PATENTSCHRIFT

(45) Veröffentlichungstag der Patentschrift: **21.09.88**

(51) Int. Cl.⁴: **G 11 B 7/24**

(21) Anmeldenummer: **85115837.8**

(22) Anmeldetag: **12.12.85**

(54) **Optisches Aufzeichnungsmedium.**

(30) Priorität: **20.12.84 DE 3446418**

(43) Veröffentlichungstag der Anmeldung: **13.08.86 Patentblatt 86/33**

(45) Bekanntmachung des Hinweises auf die Patenterteilung: **21.09.88 Patentblatt 88/38**

(84) Benannte Vertragsstaaten: **DE GB IT NL SE**

(56) Entgegenhaltungen:
**DE-A-2 951 340**
**DE-A-3 505 355**
**GB-A-2 084 605**
**US-A-3 888 875**
**US-A-3 888 876**

(73) Patentinhaber: **BASF Aktiengesellschaft, Carl-Bosch-Strasse 38, D-6700 Ludwigshafen (DE)**

(72) Erfinder: **Albert, Bernhard, Dr., Reitburgstrasse 13, D-6701 Maxdorf (DE)**
Erfinder: **Neumann, Peter, Dr., Franz-Schubert-Strasse 1, D-6908 Wiesloch (DE)**

**EP 0 190 444 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Optische Aufzeichnungsträger/Aufzeichnungsmedien zur Speicherung von Daten sind bekannt. Das Aufzeichnen der Daten erfolgt durch Licht bestimmter Wellenlängen und Intensität oder mit anderen geeigneten energiereichen Strahlen. Durch Absorption der Strahlung tritt an der bestrahlten Stelle lokal Erwärmung ein. Daher kann je nach der Schicht der Farbstoff verfärbt oder zerstört (entfärbt) werden. Es können in der Oberfläche des Trägers an der bestrahlten Stelle durch Verdampfen, Erweichen/Schmelzen Vertiefungen erzeugt werden. Beim Abtasten des Trägers tritt dann an den "beschriebenen" Stellen eine Änderung der Intensität des reflektierten Lichtes ein.

Der Träger kann eine Platte aus Glas oder geeigneten Kunststoffen wie Polymethylmethacrylat, Polystyrol oder Polycarbonat sein.

In der US-PS-4 079 895 wird ein Aufzeichnungsträger beschrieben, der eine Schicht aus einem lichtreflektierenden Material, z. B. Aluminium oder Gold, aufweist. Letztere ist mit einer lichtabsorbierenden Schicht, z. B. Fluoreszein, bedeckt. Dieser Aufzeichnungsträger kann mit Licht eines Argonlasers beschrieben und gelesen werden. Die Dicke der lichtabsorbierenden Schicht wird so gewählt, daß die Struktur ein minimales Reflexionsvermögen besitzt. Ein auffallender Lichtstrahl löst die absorbierende Schicht ab, verdampft oder schmilzt sie, so daß ein Loch entsteht, in dem die lichtreflektierende Schicht freigelegt ist. Nach der Aufnahme ergibt sich für die Wellenlänge des zur Aufnahme benutzten Lichts ein Unterschied zwischen dem minimalen Reflexionsvermögen der lichtabsorbierenden Schicht und dem höheren Reflexionsvermögen der lichtreflektierenden Schicht. Wenn das lichtreflektierende Material als dünne Schicht auf einem nur wenig wärmeleitenden Substrat vorgesehen ist, ist der Energieverlust sowohl durch Reflexion an der dünnen absorbierenden Schicht als auch wegen der geringen Wärmeleitung in der reflektierenden Schicht sehr klein. Die aus dem Lichtstrahl absorbierte Energie wird also auf dem sehr dünnen Film konzentriert.

Aus der US-PS-4 242 689 ist ein Aufzeichnungsträger bekannt, der Di-indenoperylen als lichtabsorbierende Schicht enthält. Dieser Träger kann mit einem Argonlaser beschrieben werden.

In der US-PS-4 023 185 werden ein Aufzeichnungsträger beschrieben, bei denen die lichtabsorbierende Schicht durch Verdampfen von C.I. Solvent Black 3; C.I. Nr. 26 150 erzeugt wird. Diese Aufzeichnungsträger können mit einem Argonlaser beschrieben werden.

Aus der US-PS-4 380 769 sind weitere mit einem Argonlaser beschreibbare Aufzeichnungsträger bekannt, die in der lichtabsorbierenden Schicht bzw. als lichtabsorbierende Schicht Azofarbstoffe und/oder Cumarinverbindungen in einem polymeren Bindemittel enthalten.

In der DE-OS-3 007 296 wird ein System zur Datenaufzeichnung beschrieben, das einen an ein Polymer gebundenen indigoiden photochromen Farbstoff mit einem Absorptionsmaximum bei 545 nm enthält.

Aus der JP-OS-112 793/1983 ist die Verwendung von Triphenylmethanfarbstoffen als Licht absorbierende Schicht in optischen Aufzeichnungssystemen bekannt.

Weiterhin sind optische Speichersysteme bekannt, die als absorbierende Verbindungen Oxazine (JP-OS-132 231/1983), Cyaninfarbstoffe (JP-OS-112 790/1983 und 125 246/1983), Phthalocyaninverbindungen (EP-A-84 729, US-PS-4 241 355, JP-OS-56 892/1983) und Naphthochinon-1,4-Verbindungen, die Substituenten mit Donorwirkung tragen (JP-OS-112 793/1983), enthalten. Diese Speicher können mit einem He-Ne-Laser (633 nm) beschrieben werden.

In der DE-OS-3 014 677 ist ein optisches Aufzeichnungsmedium beschrieben, das als Farbstoff 1,4-Diamino-2-methoxy-anthrachinon in einer Polymermatrix gelöst enthält.

Materialien, die als lichtabsorbierende Schicht für Aufzeichnungsträger verwendet werden sollen, müssen in Form einer dünnen, glatten Schicht hoher optischer Qualität und vorbestimmter Dicke auf geeignete Trager aufzubringen sein. Die Materialien müssen ferner bei der Wellenlänge der verwendeten Lichtquelle absorbieren und hinreichend empfindlich sein, d.h., diese Materialien müssen bei Einstrahlung von Lichtpulsen von wenigen nJ Energiegehalt oder darunter, die auf Brennpunktdurchmesser von ca. $\leqslant$ 1 µm Durchmesser fokussiert sind, ihre optischen Eigenschaften im bestrahlten Bereich in einer der oben beschriebenen Weisen ändern.

Aufgabe der vorliegenden Erfindung war es, optische Aufzeichnungsmedien mit Licht absorbierenden Schichten zur Verfügung zu stellen, die diesen Anforderungen genügen, die einfach herzustellen, über lange Zeit stabil und korrosionsfrei und ungiftig sind. Außerdem sollten diese Aufzeichnungsmedien mittels Halbleiter-Laser beschrieben und gelesen werden können.

Es wurde gefunden, daß sehr gute für das Beschreiben und Lesen mittels eines Halbleiter-Lasers geeignete optische Aufzeichnungsmedien aus einem Träger und einer Licht absorbierenden Schicht vorliegen, wenn die lichtabsorbierende Schicht aus mindestens einem Farbstoff der Formel (I)

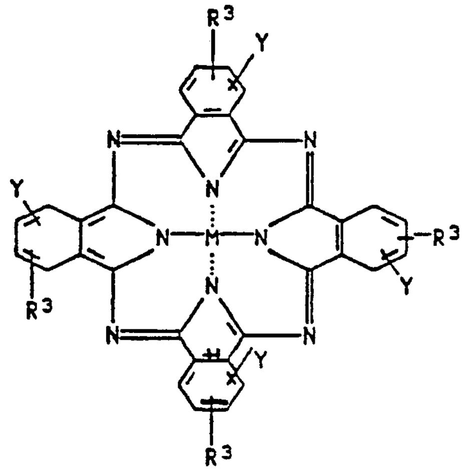

(I)

besteht oder mindestens einen Farbstoff der Formel (I) enthält, in der

M für zwei Wasserstoffatome für Cu, Ni, Pb, VO, TiO, Nb, Ta, Pd, Sn, Cr, Mn, Fe oder Co,

Y für 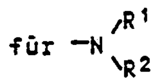 , worin

$R^1$ und $R^2$ unabhängig voneinander für Wasserstoff, $C_1$- bis $C_8$-Alkyl, Phenyl, Phenyl-$C_1$- bis $C_4$-alkyl oder $C_1$- bis $C_8$-Alkoxy-$C_2$- oder $C_3$-alkyl oder

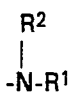

für einen gesättigten 5- oder 6-gliedrigen heterocyclischen Ring, der $R^3$ gegebenenfalls N, O und/oder S als weitere Ringglieder enthält, und $R^3$ für Wasserstoff, $C_1$- bis $C_8$-Alkyl, $C_1$- bis $C_8$-Alkoxy-$C_2$ oder $C_3$-alkyl, Cyclohexyl, Phenyl, Phenyl-$C_1$- bis $C_4$-alkyl oder für

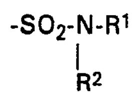

stehen, wobei die Phenylreste in $R^1$, $R^2$ und $R^3$ gegebenenfalls durch Chlor, Brom, Fluor, $C_1$- bis $C_6$-Alkyl, $C_1$-bis $C_6$-Alkoxy, $C_1$- bis $C_8$-Alkoxy-$C_2$- oder $C_3$-alkyl oder durch $C_1$-bis $C_8$-Alkoxy-$C_2$- oder $C_3$-alkoxy substituiert sind und der Farbstoff eine hohe Absorption im Bereich von 650 bis 880 nm aufweist.

Die Aufzeichnungsmedien der vorliegenden Erfindung sind mit einem Halbleiter-Laser beschreibbar und lesbar und gegenüber atmosphärischen Einflüssen und Tageslicht sehr stabil. Die verwendeten Farbstoffe sind nicht toxisch. Die Aufzeichnungsträger sind preiswert herzustellen.

Aufgrund der hohen Lichtabsorption der Farbstoffe (I) sind die erfindungsgemäßen Aufzeichnungsmedien sehr empfindlich gegenüber dem Licht von geeigneten Laserlichtquellen z. B. von Halbleiter-Laser.

Der Aufbau der Aufzeichnungsmedien ist an sich bekannt.

Als Träger kommen z. B. Glasplatten oder -scheiben sowie Kunststoffplatten/-scheiben insbesondere solche aus Polymethylmethacrylat (PMMA) in Betracht.

Zwischen der lichtabsorbierenden Schicht und dem Träger kann eine reflektierende Schicht vorhanden sein, so daß das eingestrahlte und durch die farbige Schicht wandernde Licht (so weit es nicht absorbiert wird) an der Reflektorschicht reflektiert wird und nochmals durch die gefärbte Schicht wandert. In diesen Fällen soll es nach dem Stand der Technik (Bell, Spong; IEEE J. of Quantum Electronics Vol. QE-14 (1978), 7, S. 490; RCA-Reviews 40 (1979), S. 345) vorteilhaft sein, der Farbstoffschicht die Dicke $\lambda/4$ ($\lambda$ = Wellenlänge des eingestrahlten Lichtes) zu geben, da durch Interferenz eine besonders hohe Ausnutzung (Schwächung) des eingestrahlten Lichts erreicht wird. Es wurde überraschenderweise gefunden, daß aber auch mit Schichtdicken, die deutlich unter $\lambda/4$ liegen, sehr empfindliche Aufzeichnungsträger hergestellt werden können.

Die lichtreflektierende Schicht sollte so beschaffen sein, daß diese das zur Aufnahme und zur Abtastung verwendete Licht möglichst quantitativ reflektiert. Geeignete lichtteflektierende Materialien sind z. B. Aluminium, Rhodium, Gold, Zinn, Blei, Wismut, Kupfer und dielektrische Spiegel. Die Dicke der lichtreflektierenden Schicht soll so groß sein, daß diese das zur Aufnahme oder zum Abtasten benutzte Licht möglichst vollständig reflektiert.

Für diesen Zweck sind Spiegel mit geringer Wärmeleitfähigkeit vorteilhaft.

Träger, bzw. die Licht reflektierende Schicht müssen eine optisch glatte, ebene Oberfläche aufweisen und

an der Oberfläche so beschaffen sein, daß die absorbierende Schicht darauf fest haftet.

Die Belichtung kann auch durch ein transparentes Substrat erfolgen. Als Schichtfolge kommt dann in Frage: Substrat-Absorberschicht-Reflektor; der Reflektor kann gegebenenfalls fehlen.

Als Farbstoffe kommen solche der Formel (I) in Betracht, die eine hohe Absorption im Bereich von 650 bis 880 nm aufweisen:

Vorzugsweise steht Y entweder in der 3- oder 6-Stellung oder in der 4-oder 5-Stellung der Isoindolin-/Isoindoleninsysteme.

Vorzugsweise steht M für VO, TiO, Pb, Cu oder Sn, von denen VO, TiO und Pb besonders bevorzugt sind.

Für $R^1$ und $R^2$ sind im einzelnen neben Wasserstoff z. B. zu nennen:

$C_1$- bis $C_8$-Alkyl: Methyl, Ethyl, n- und i-Propyl, n- und i-Butyl, sec-Butyl, Pentyl, Hexyl, t-Butyl, n-Octyl, 2-Ethylhexyl;

$C_1$- bis $C_8$-Alkoxy-$C_2$-oder $C_3$-alkyl: 2-Methoxyethyl, 2-Ethoxyethyl, 2-n-und 2-i-Propoxyethyl, 2-n- und 2-i-Butoxyethyl, 2-Pentoxyethyl, 2-Hexoxy-ethyl, 2-n-Octoxyethyl, 2-(2'-Ethylhexoxy)-ethyl, 3-Methoxypropyl, 3-Ethoxypropyl, 3-n- und 3-i-Propoxypropyl, 3-n, oder 3-i-Butoxypropyl, 3-Pentoxypropyl, 3-Hexoxypropyl, 3-n-Octoxypropyl und 3-(2'-Ethylhexoxy)-propylcyclohexyl; gegebenenfalls substituiertes Phenyl und Phenyl-$C_1$-bis $C_4$-alkyl: Phenyl, Chlorphenyl, Bromphenyl, Fluorphenyl, 3- oder 4-Methylphenyl, 3- oder 4-Ethylphenyl, 3- und 4-Methoxyphenyl, 3- und 4-Ethoxyphenyl, 3- und 4-i-Propoxyphenyl, 3- und 4-n-Propoxyphenyl, 3- und 4-n-Butoxyphenyl, 3- und 4-i-Butoxyphenyl, 2-Methoxyethylphenyl, 2'-Ethoxyethylphenyl, 2'-Propoxyethylphenyl, 2'-Butoxyethylphenyl, 3'-Methoxypropylphenyl, 3'-Ethoxypropylphenyl, 3'-Butoxypropylphenyl; 2'-Methoxyethoxyphenyl, 2'-Ethoxyethoxyphenyl, 2'-Propoxyethoxyphenyl, 2'-Butoxyethoxyphenyl, 3'-Methoxypropoxyphenyl, 3'-Ethoxypropoxyphenyl, 3'-Butoxypropoxyphenyl; Benzyl, 2-Phenylethyl, 2- und 3-Phenylpropyl.

Als gesättigte 5- oder 6-gliedrige Heterocyclen sind für

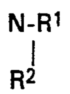

im einzelnen beispielsweise zu nennen:

Pyrrolidino, Piperidino, Morpholino, Thiomorpholino, Thiomorpholino-S, S-dioxid, N-Methyl-piperazino, N-Ethyl-piperazino, bevorzugt sind: Pyrrolidino, Piperidino, N-Ethyl-piperazino.

Vorzugsweise stehen $R^1$ und $R^2$ unabhängig voneinander für Wasserstoff oder $C_1$-bis $C_4$-Alkyl oder einer der Reste $R^1$ oder $R^2$ auch für Phenyl, für durch Chlor, Brom, Fluor, $C_1$-bis $C_4$-Alkyl, $C_1$- bis $C_4$-Alkoxy, $C_1$- bis $C_4$-Alkoxy-$C_2$ oder $C_3$-alkyl oder $C_1$- bis $C_4$-Alkoxy-$C_2$- oder $C_3$-alkoxy substituiertes Phenyl oder

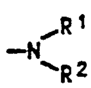

bedeutet Pyrrolidino, Piperidino oder N-Ethylpiperazino.

Für $R^1$ sind Wasserstoff, Methyl, Ethyl, i-Propyl, i-Butyl, t-Butyl und 2-Methoxyethyl und für $R^2$ die für $R^1$ genannten Substituenten sowie Phenyl und 3- oder 4-Methylphenyl bevorzugt.

Für $R^3$ sind neben Wasserstoff im einzelnen zu nennen: $C_1$-$C_8$-Alkyl wie Methyl, Ethyl, n- und i-Propyl, n-, i-, sec- und t-Butyl, Pentyl, Hexyl, n-Octyl, 2-Ethylhexyl. Vorzugsweise steht $R^3$ für Wasserstoff oder t-Butyl.

Bevorzugt sind Farbstoffe der Formeln (II) und (III).

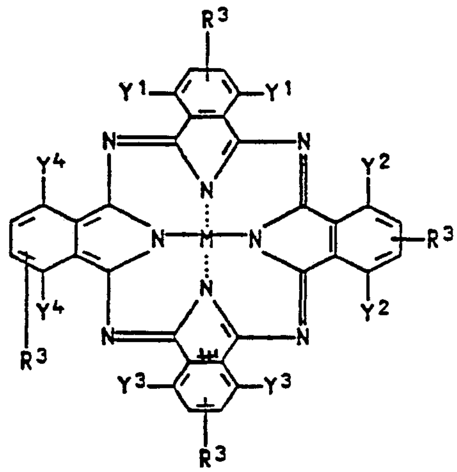

(II)

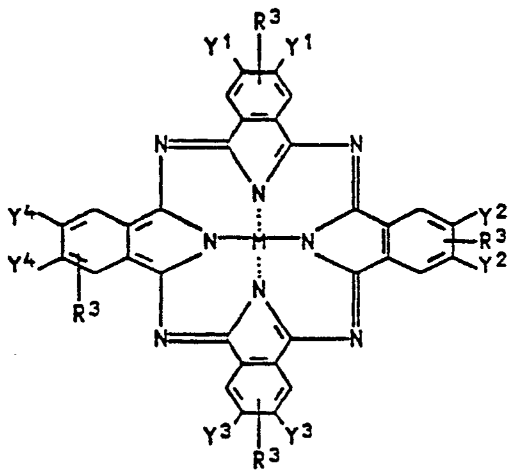

(III)

in denen jeweils ein $Y^1$, $Y^2$, $Y^3$ und $Y^4$

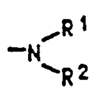

und das andere $Y^1$, $Y^2$, $Y^3$ und $Y^4$ Wasserstoff oder $R^3$ bedeuten und $R^1$, $R^2$,

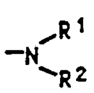

und $R^3$
die oben angegebene Bedeutung haben.

Von den Farbstoffen (II) und (III) sind solche hervorzuheben, in denen $R^3$ für Wasserstoff oder tert.-Butyl, $R^1$ für Wasserstoff oder $C^1$- bis $C_4$-Alkyl, $R^2$ für Wasserstoff, $C_1$- bis $C_4$-Alkyl, Phenyl oder durch Chlor, Brom, Fluor, $C_1$-bis $C_4$-Alkyl, $C_1$- bis $C_4$-Alkoxy, $C_1$- bis $C_4$-Alkoxy-$C_2$- oder $C_3$-alkyl oder durch $C_1$- bis $C_4$-Alkoxy-$C_2$- oder $C_3$-alkoxy substituiertes Phenyl stehen oder bei denen

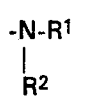

Pyrrolidino, Piperidino oder N-Ethyl-piperazino ist.

Besonders hervorzuheben sind Farbstoffe der Formeln (IIa) und (IIIa), in denen M' für VO, TiO oder Pb, $R^4$ und $R^5$ unabhängig voneinander für $C_1$- bis $C_4$-Alkyl oder

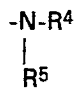

für Pyrrolidino, Piperidino, Morpholino, N-Methyl-piperazino oder N-Ethyl-piperazino und $R^6$ für Wasserstoff oder tert.-Butyl stehen.

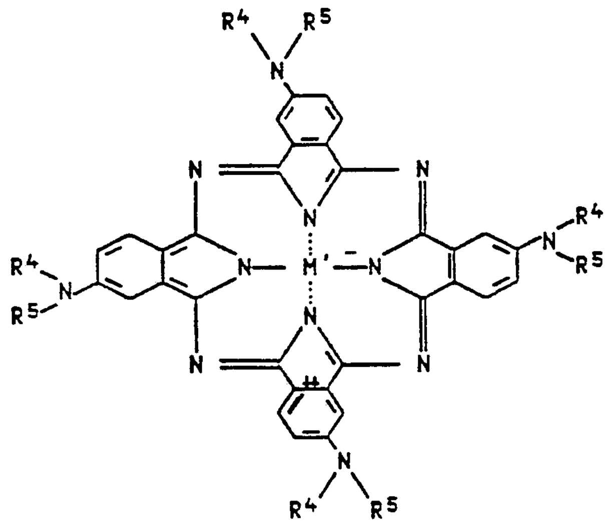

(IIIa)

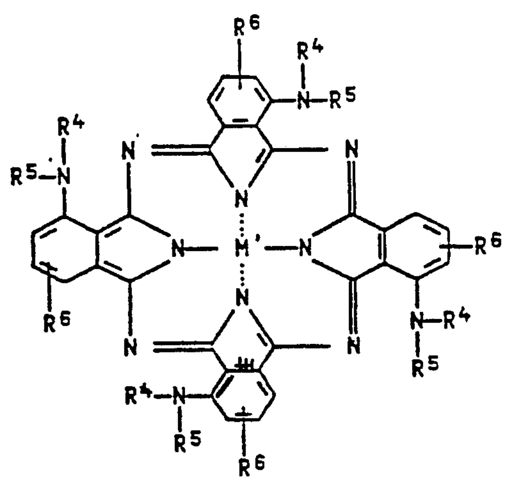

(IIa)

Im einzelnen sind zu nennen:

**Tabelle I:**

| | M' | $R^4$ | | $R^5$ |
|---|---|---|---|---|
| III. 1 | V=O | $CH_3$ | | $CH_3$ |
| . 2 | V=O | $C_2H_5$ | | $C_2H_5$ |
| . 3 | V=O | | 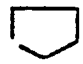 | |
| . 4 | V=O | | 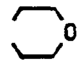 | |
| . 5 | V=O | | 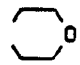 | |
| . 6 | V=O | | 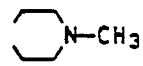 | |
| . 7 | V=O | | 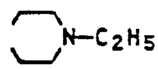 | |
| . 8 | V=O | n-$C_4H_9$ | | n-$C_4H_9$ |
| . 9 | V=O | i-$C_3H_9$ | | i-$C_3H_9$ |
| III. 10 | Pb | $CH_3$ | | $CH_3$ |
| . 11 | Pb | $C_2H_5$ | | $C_2H_5$ |
| . 12 | Pb | i-$C_3H_7$ | | i-$C_3H_7$ |
| . 13 | Pb | n-$C_4H_9$ | | n-$C_4H_9$ |
| . 14 | Pb | | 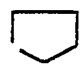 | |
| . 15 | Pb | | 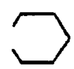 | |
| . 16 | Pb | | 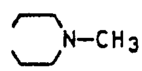 | |
| . 17 | Pb | | 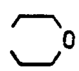 | |
| . 18 | Pb | | 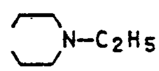 | |
| III. 19 | Ti=O | $CH_3$ | | $CH_3$ |
| . 20 | Ti=O | $C_2H_5$ | | $C_2H_5$ |
| . 21 | Ti=O | i-$C_3H_7$ | | i-$C_3H_7$ |
| . 22 | Ti=O | n-$C_4H_9$ | | n-$C_4H_9$ |

| | | |
|---|---|---|
| .23 | Ti=O | 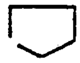 |
| .24 | Ti=O | 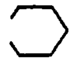 |
| .25 | Ti=O | 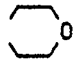 |
| .26 | Ti=O | 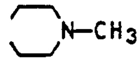 |
| .27 | Ti=O | 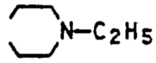 |

**Tabelle II:**

| | M′ | $R^4$ | | $R^5$ | $R^6$ |
|---|---|---|---|---|---|
| II. 1 | V=O | $CH_3$ | | $CH_3$ | H |
| .2 | V=O | $C_2H_5$ | | $C_2H_5$ | H |
| .3 | V=O | | 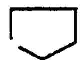 | | H |
| .4 | V=O | | 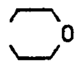 | | H |
| .5 | V=O | | 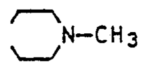 | | H |
| .6 | V=O | | 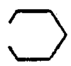 | | H |
| .7 | V=O | n-$C_4H_9$ | | n-$C_4H_9$ | H |
| .8 | V=O | | | 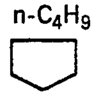 | 4/5 t-$C_4H_9$ |
| .9 | V=O | | | 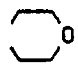 | 4/5 t-$C_4H_9$ |
| II. 10 | V=O | $C_2H_5$ | | $C_2H_5$ | 4/5 t-$C_4H_9$ |
| .11 | Ti=O | $CH_3$ | | $CH_3$ | H |
| .12 | Ti=O | $C_2H_5$ | | $C_2H_5$ | H |
| .13 | Ti=O | n-$C_4H_9$ | | n-$C_4H_9$ | H |
| .14 | Ti=O | | 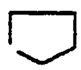 | | H |
| .15 | Ti=O | | 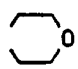 | | H |
| .16 | Ti=O | | 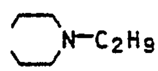 | | H |
| .17 | Ti=O | | 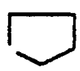 | | 4/5 t-$C_4H_9$ |
| .18 | Pb | $CH_3$ | | $CH_3$ | H |
| .19 | Pb | $C_2H_5$ | | $C_2H_5$ | H |
| II. 20 | Pb | | 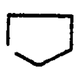 | | H |
| .21 | Pb | | 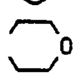 | | H |
| .22 | Pb | | 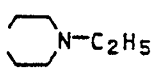 | | H |

| | | | | | |
|---|---|---|---|---|---|
| . 23 | Pb | $CH_3$ | | $CH_3$ | 4/5 t-$C_4H_9$ |
| . 24 | Pb | | 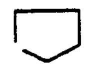 | | 4/5 t-$C_4H_9$ |
| . 25 | Pb | | 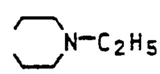 | | 4/5 t-$C_4H_9$ |
| . 26 | Pb | | 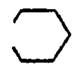 | | 4/5 t-$C_4H_9$ |

Die Herstellung der Phthalocyanine erfolgt nach an sich bekannten Methoden. Aminosubstituierte Phthalocyanine sind beispielsweise in (S.A. Mikhalenko, J. Gem. Chem. USSR, 46 (1976), 2075) und (S.A. Mikhalenko, J. Gem. Chem. USSR, 51 (1981), 1405) beschrieben.

Die erfindungsgemäß für die Licht absorbierende Schicht verwendeten Farbstoffe absorbieren stark bei der Wellenlänge von ca. 650 - 880 nm und können auf eine lichtreflektierende Schicht so aufgebracht werden, daß glatte Absorptionsschichten von optischer Qualität entstehen. In diese Schichten kann die zu speichernde Information mit einem hohen Signal-Rausch-Verhältnis eingeschrieben werden.

Das Aufbringen der erfindungsgemäßen Absorptionsmaterialien kann durch Aufschleudern, Aufrakeln, Tauchen von gelöstem oder dispergiertem Farbstoff, gegebenenfalls in Gegenwart von Bindemitteln, oder durch Aufdampfen im Vakuum erfolgen. Das Aufbringen von metallischen Reflexionsschichten erfolgt ebenfalls durch Aufdampfen oder Aufsputtern im Vakuum.

Für das Aufdampfen im Vakuum wird das aufzubringende Material zunächst in ein geeignetes Gefäß mit einer Widerstandsheizung gefüllt und in eine Vakuumkammer gesetzt. Die Heizung wird eingeschaltet und das zu bedampfende Substrat oberhalb des Gefäßes mit dem aufzudampfenden Material bzw. Farbstoffs in einen Halter eingesetzt. Dieser ist so konstruiert, daß das Substrat gegebenenfalls rotiert werden kann (z. B. mit 50 Upm).

Die Vakuumkammer wird auf etwa 1.33 mPa ($10^{-5}$ Torr) evakuiert und die Heizung so eingestellt, daß die Temperatur des aufzudampfenden Materials bis zu dessen Verdampfungstemperatur ansteigt. Die Verdampfung wird solange fortgesetzt, bis die aufgedampfte Schicht (Absorptionsschicht) die gewünschte Dicke hat. Je nach Systemaufbau wird zuerst der Farbstoff und dann die reflektierende Schicht aufgebracht oder umgekehrt verfahren. Auf das Aufbringen einer reflektierenden Schicht kann gegebenenfalls verzichtet werden.

Die Dicke der beim Aufdampfen aufwachsenden Schicht kann mit Hilfe bekannter Verfahren überwacht werden, z. B. mit Hilfe eines optischen Systems, welches das Reflexionsvermögen der mit dem Absorptionsmaterial bedeckten Reflexionsoberfläche mißt, ebenso kann das Wachsen der Schichtdicke mit einem Schwingquarz verfolgt werden.

Für das Aufbringen der Schichten aus Lösung bereitet man in einem geeigneten Lösungsmittel, wie Methylenchlorid, Chloroform, Aceton, Methylethylketon, Cyclohexanon, Toluol, Acetonitril, Essigester, Methanol, eine Lösung oder gegebenenfalls eine Dispersion und setzt gegebenenfalls ein Bindemittel zu, z. B. Polystyrol, Polyvinylacetat, Polyvinylpyrrolidon.

Diese Farbstoffzubereitung wird nun durch Schleudern, Rakeln oder Tauchen auf ein vorher gereinigtes Substrat aufgebracht und die Schicht an der Luft getrocknet.

Der Film kann auch im Vakuum und/oder bei erhöhter Temperatur getrocknet werden. Je nach Systemaufbau wird zuerst der Farbstoff und dann der Reflektor aufgebraucht oder umgekehrt verfahren, wobei auf das Aufbringen einer reflektierenden Schicht gegebenenfalls verzichtet werden kann.

**Beispiel 1**

Eine Glasplatte (Träger), die eine frisch aufgedampfte 50 nm dicke Aluminiumschicht als Reflektor aufweist, wird auf der Reflektorschicht mit einer Schicht des Farbstoffs (III. 1) bedampft.

Dazu wurde in einer Vakuumkammer ein Verdampferschiffchen mit dem betreffenden Farbstoff gefüllt. Die Verdampferkammer wurde auf etwa 1.33 mPa ($10^{-5}$ Torr) evakuiert. Das Schiffchen wurde dann an eine Stromquelle angeschlossen und auf etwa 200 bis 275°C erhitzt. In diesem Temperaturbereich wurde der Verschluß geöffnet und der Farbstoff mit einer Geschwindigkeit von etwa 0,4 nm pro Sekunde aufgedampft. Das Verdampfen wurde solange fortgesetzt, bis eine absorbierende Schicht von etwa 30 nm Dicke auf der Reflektorschicht niedergeschlagen war.

Es entstand eine homogene, blaue, amorphe Schicht ohne "Pinholes" (kleine Löcher).

Der erhaltene Aufzeichnungsträger wurde mit Lichtpulsen eines Halbleiter-Lasers (800 nm) mit einer Intensität von 6 mW und einer Länge von 100 nsec bestrahlt, wobei die Strahlung auf einen Brennfleck von 1,5 µm Durchmesser auf der Oberfläche der Farbstoffschicht fokussiert war. Die hierdurch eingestrahlte Energie von 0,6 nJ je Puls reichte aus, um je Puls ein Loch von 0,8 bis 1,2 µm Durchmesser zu erzeugen.

Eine Aufnahme mit dem Rasterelektronenmikroskop zeigt fast kreisrunde Löcher mit steilen Wänden ohne Wulst an der Oberfläche. Die Randdurchmesser betragen 1,0 bis 1,2 µm.

Die Aufzeichnung erfolgte in an sich bekannter Weise. Aus dem Strahl eines Halbleiter-Lasers von ca. 9 mW tatsächlicher Ausgangsleistung wurden mit Hilfe eines akustooptischen Modulators Pulse von 100 nsec Dauer geformt. Der so modulierte Strahl fiel durch einen Strahlaufteiler, einen polarisierenden Strahlteilerwürfel und ein Viertelwellenlängenplättchen in ein Objektiv einer numerischen Apertur von 0,6, das den Strahl auf die Oberfläche der Farbschicht zu einem Punkt von ca. 1,0 µm Durchmesser fokussiert. Die dort während des Impulses auftreffende Lichtintensität beträgt 6 mW. Jede zu beschreibende Stelle des Aufzeichnungsmediums wurde mit einem einzelnen Puls belegt.

Durch Absorption des eingestrahlten Lichts wird das Medium an der betreffenden Stelle erhitzt und es bildet sich ein Loch.

Zur Wiedergabe wurde ein nicht modulierter, in der gleichen Weise fokussierter Strahl eines Halbleiter-Lasers, der durch Filter auf 1 mW abgeschwächt wurde, über die beschriebenen Stellen des Aufzeichnungsmediums geführt und das vom Medium reflektierte Licht mit einem Fotodetektor gemessen. Die Reflexion an einer Stelle, an der ein Loch ist, unterscheidet sich aufgrund der Veränderung der Schicht deutlich von einer Stelle ohne Loch, wodurch das Vorhandensein eines Lochs an dieser Stelle vom Fotodetektor festgestellt wurde.

**Beispiel 2**

Eine Platte aus Polymethylmethacrylat (PMMA) wurde in einer Vakuumkammer oberhalb eines Verdampferschiffchens angeordnet. Das Verdampferschiffchen enthielt Farbstoff (III. 3).

Die Verdampferkammer wurde auf etwa 1.33 mPa ($10^{-5}$ Torr). Das Schiffchen wurde dann auf etwa 200 bis 275°C erhitzt. In diesem Temperaturbereich wurde der Verschluß geoffnet und der Farbstoff mit einer Geschwindigkeit von etwa 0,4 nm pro Sekunde aufgedampft. Das Verdampfen wurde solange fortgesetzt, bis eine absorbierende Schicht von etwa 25 nm Dicke auf der Schicht niedergeschlagen war.

Es entstand eine glatte, blaue, amorphe, spiegelnde und durchgehende ohne Pinholes freie Schicht.

Auf diese Schicht wurde ein Reflektor aus Zinn von etwa 30 nm Dicke aufgedampft.

Der erhaltene Aufzeichnungsträger wurde mit Lichtpulsen eines Halbleiter-Lasers (836 nm) mit einer Intensität von 6 mW und einer Länge von 100 nsec bestrahlt, wobei die Strahlung auf einen Brennfleck von 1,0 µm Durchmesser auf der Oberfläche der Farbstoffschicht fokussiert war. Die hierdurch eingestrahlte Energie von 0,6 nJ je Puls reichte aus, um je Puls ein Loch von 0,9 bis 1,2 µm 0 zu erzeugen.

**Beispiel 3**

Eine Trägerplatte aus PMMA wurde entsprechend Beispiel 2 mit (II.1) bedampft. Dicke der aufgedampften Farbstoffschicht: 20 nm.

Es entstand eine glatte, blaue, amorphe, spiegelnde und durchgehende von Pinholes freie Schicht.

Auf diese Schicht wurde eine Reflektorschicht aus Aluminium von ca. 30 nm aufgedampft.

Der erhaltene Aufzeichnungsträger wurde mit Lichtpulsen eines Halbleiter -Lasers (800 nm) mit einer Intensität von 6 mW und einer Länge von 100 nsec bestrahlt, wobei die Strahlung auf einen Brennfleck von 1,0 µm Durchmesser auf der Oberfläche der Farbstoffschicht fokussiert war. Die hierdurch eingestrahlte Energie von 0,6 nJ je Puls reichte aus, um je Puls ein Loch von 1,0 bis 1,2 µm 0 zu erzeugen.

**Beispiele 4 bis 13**

Eine PMMA-Platte wurde in der in Beispiel 2 beschriebenen Apparatur und in der dort angegebenen Weise mit in der folgenden Tabelle angegebenen Farbstoffen bedampft.

Anschließend wurde eine Reflektorschicht aus Zinn von ca. 30 nm aufgedampft. Hierbei wurden die folgenden Farbstoffe verwendet:

**Tabelle III:**

| Beisp. | Farbstoff der Formel | Dicke der Farbstoffschicht (nm) |
|---|---|---|
| 4 | III. 2 | 40 |
| 5 | III. 4 | 35 |
| 6 | III. 9 | 30 |
| 7 | III. 10 | 45 |
| 8 | III. 12 | 40 |
| 9 | III. 19 | 40 |
| 10 | II. 1 | 45 |
| 11 | II. 3 | 25 |
| 12 | II. 11 | 20 |
| 13 | II. 14 | 30 |

**Beispiel 14**

Es wurde eine Lösung aus 0,1 g des Farbstoffs III. 8 und 0,2 g Polyvinylacetat in 15 ml Methylethylketon hergestellt und auf eine PMMA-Platte aufzentrifugiert. Nach dem Trocknen an der Luft und anschließend bei Raumtemperatur im Vakuum wurde ein gleichmäßiger Film ohne Pinholes von ca. 500 nm Dicke erhalten. Auf diese Farbschicht wurde im Vakuum eine Reflektorschicht aus Aluminium von ca. 30 nm Dicke aufgedampft.

Der erhaltene Aufzeichnungsträger wurde mit Lichtpulsen eines Halbleiter-Lasers (800 nm) mit einer Intensität von 60 mW und einer Länge von 100 nsec bestrahlt, wobei die Strahlung auf einen Brennfleck von 1,0 µm Durchmesser auf der Oberfläche der Farbstoffschicht fokussiert war. Die hierdurch eingestrahlte Energie von 0,6 nJ je Puls reichte aus, um je Puls ein Loch von 1 bis 1,3 µm Durchmesser zu erzeugen.

Durch Absorption des eingestrahlten Lichts wird das Medium an der betreffenden Stelle erhitzt. Hierdurch ändert sich an diesen Stellen die Reflexion des Laserlichts.

Zur Wiedergabe wurde ein nicht modulierter, in der gleichen Weise fokussierter Strahl eines Halbleiter-Lasers, der durch Filter auf 1 mW abgeschwächt wurde, über die beschriebenen Stellen des Aufzeichnungsmediums geführt und das vom Medium reflektierte Licht mit einem Fotodetektor gemessen. Die Reflexion an einer vorher beschriebenen Stelle unterscheidet sich aufgrund der Veränderung der Schicht deutlich von einer unbeschriebenen Stelle, was an dieser Stelle vom Fotodetektor festgestellt werden kann.

**Beispiel 15**

Auf einen Glasträger wurde im Vakuum eine Reflektor-Schicht von ca. 50 nm Aluminium aufgedampft. Eine Lösung aus 0,1 g des Farbstoffs II. 7 und 0,2 g Polyvinylacetat in Methylethylketon wurde auf den verspiegelten Glasträger aufgeschleudert und die Farbstoffschicht zunächst an der Luft, und dann im Vakuum bei Raumtemperatur getrocknet. Es wurde eine Schichtdicke von ca. 75 nm erhalten.

In die Schicht konnte entsprechend Beispiel 14 mit einem Halbleiter-Laser (800 nm) mit einer Energie von ca. 0,8 nJ ein Loch einbeschrieben werden.

**Beispiel 16 bis 21**

Auf PMMA-Platten wurde entsprechend den Angaben in Beispiel 14 eine Farbstoff-Polyvinylacetat-Lösung in Methylethylketon aufgeschleudert und nach dem Trocknen mit Aluminium bedampft (Schichtdicke ca. 40 nm).

Es wurden folgende Farbstoffe verwendet:

**Tabelle IV:**

| Beisp. | Farbstoff Formel | Dicke der Farbstoff enthaltenden Schicht [nm] |
|---|---|---|
| 16 | III. 7 | 70 |
| 17 | III. 13 | 85 |
| 18 | III. 21 | 70 |
| 19 | III. 22 | 100 |
| 20 | III. 13 | 70 |
| 21 | III. 17 | 90 |

**Patentansprüche**

1. Optisches Aufzeichnungsmedium aus einem Träger und einer Licht absorbierenden Schicht, dadurch gekennzeichnet, daß die Licht absorbierende Schicht aus mindestens einem Farbstoff der Formel

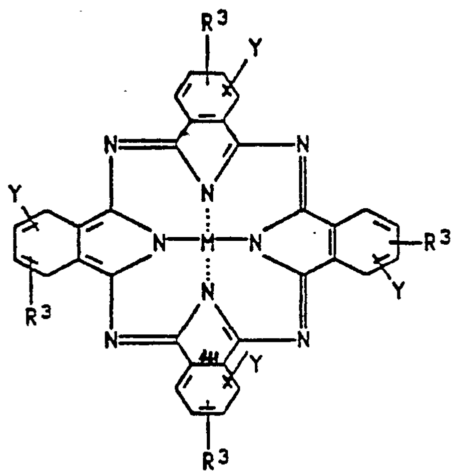

(I)

besteht oder mindestens einen Farbstoff der Formel (I) enthält, in der
M für zwei Wasserstoffatome, für Cu, Ni, Pb, VO, TiO, Nb, Ta, Pd, Sn, Cr, Mn, Fe oder Co,

Y für FIGFIG worin

$R^1$ und $R^2$ unabhängig voneinander für Wasserstoff, $C_1$- bis $C_8$-Alkyl, Phenyl, Phenyl-$C_1$- bis $C_4$-alkyl oder $C_1$- bis $C_8$-Alkoxy-$C_2$- oder $C_3$-alkyl oder

$R^2$
|
-N-$R^1$

für einen gesättigten 5- oder 6-gliedrigen heterocyclischen Ring, der gegebenenfalls N, O und/oder S als weitere Ringglieder enthält, und
$R^3$ für Wasserstoff, $C_1$- bis $C_8$-Alkyl, $C_1$- bis $C_8$-Alkoxy-$C_2$-oder $C_3$-alkyl, Cyclohexyl, Phenyl, Phenyl-$C_1$- bis $C_4$-alkyl oder für
-$SO_2$-N-$R^1$
|
$R^2$

stehen, wobei die Phenylreste in $R^1$, $R^2$ und $R^3$ gegebenenfalls durch Chlor, Brom, Fluor, $C_1$- bis $C_6$-Alkyl, $C_1$-bis $C_6$-Alkoxy, $C_1$-bis $C_8$-Alkoxy-$C_2$- oder $C_3$-alkyl oder durch $C_1$-bis $C_8$-Alkoxy-$C_2$-oder $C_3$-alkoxy substituiert sind und der Farbstoff eine hohe Absorption im Bereich von 650 bis 880 nm aufweist.

2. Optisches Aufzeichnungsmedium gemäß Anspruch 1, dadurch gekennzeichnet, daß M für VO, TiO, Pb, Cu oder Sn steht.

3. Optisches Aufzeichnungssystem gemäß Anspruch 1 oder 2, dadurch gekennzeichnet, daß $R^1$ und $R^2$

unabhängig voneinander für Wasserstoff oder $C_1$- bis $C_4$-Alkyl oder einer der Reste $R^1$ oder $R^2$ auch für Phenyl, für durch Chlor, Brom, Fluor, $C_1$- bis $C_4$-Alkyl, $C_1$- bis $C_4$-Alkoxy, $C_1$- bis $C_4$-Alkoxy-$C_2$- oder $C_3$-alkyl oder $C_1$- bis $C_4$-Alkoxy-$C_2$- bis $C_3$-alkoxy substituiertes Phenyl stehen oder

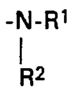

Pyrrolidino, Piperidino oder N-Ethyl-piperazino ist.

4. Optisches Aufzeichnungssystem gemäß Anspruch 1, 2 oder 3, dadurch gekennzeichnet, daß $R^3$ für Wasserstoff oder tert.-Butyl steht.

5. Optisches Aufzeichnungssystem gemäß Anspruch 1, 2 oder 4, dadurch gekennzeichnet, daß $R^1$ für Wasserstoff. Methyl, Ethyl, i-Propyl, i-Butyl, tert.-Butyl oder 2-Methoxyethyl und $R^2$ für Wasserstoff, Methyl, Ethyl, i-Propyl, i-Butyl, tert.-Butyl, 2-Methoxyethyl, Phenyl, 3-Methylphenyl oder 4-Methylphenyl stehen.

6. Optisches Aufzeichnungssystem gemäß Anspruch 1, dadurch gekennzeichnet, daß die Licht absorbierende Schicht aus mindestens einem Farbstoff der Formeln

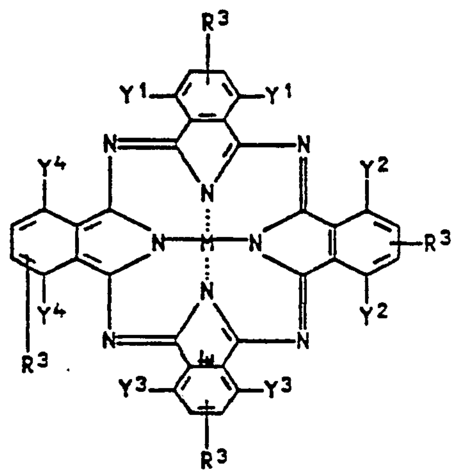

(II)

oder

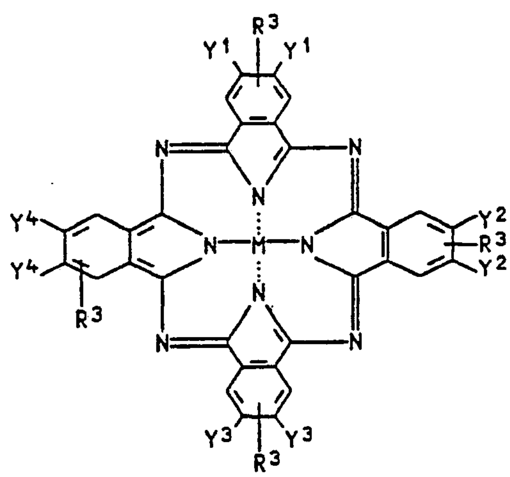

(III) ,

besteht oder mindestens einen Farbstoff dieser Formeln enthält, wobei in den Formeln ein $Y^1$, $Y^2$, $Y^3$ und $Y^4$ für

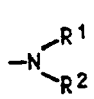

und das andere $Y^1$, $Y^2$, $Y^3$ und $Y^4$ für Wasserstoff oder $R^3$ stehen, wobei $R^1$, $R^2$, $R^3$ und

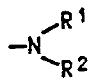

die im Anspruch 1 angegebene Bedeutung haben.

7. Optisches Aufzeichnungssystem gemäß Anspruch 6, dadurch gekennzeichnet, daß $R^1$ und $R^2$ unabhängig voneinander für Wasserstoff oder $C_1$- bis $C_4$-Alkyl oder einer der Reste $R^1$ oder $R^2$ auch für Phenyl, für durch Chlor, Brom, Fluor, $C_1$- bis $C_4$-Alkyl, $C_1$-bis $C_4$-Alkoxy, $C_1$-bis $C_4$-Alkoxy-$C_2$- oder $C_3$-alkyl oder für durch $C_1$-bis $C_4$-Alkoxy-$C_2$-bis $C_3$-alkoxy substituiertes Phenyl stehen oder

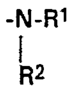

Pyrrolidino, Piperidino oder N-Ethyl-piperazino ist.

8. Optisches Aufzeichnungssystem gemäß Anspruch 6, dadurch gekennzeichnet, daß $R^1$ für Wasserstoff, Methyl, Ethyl, i-Propyl, i-Butyl, tert.-Butyl oder 2-Methoxyethyl und $R^2$ für Wasserstoff, Methyl, Ethyl, i-Propyl, i-Butyl, tert.-Butyl, 2-Methoxyethyl, Phenyl, 3-Methylphenyl oder 4-Methylphenyl stehen.

9. Optisches Aufzeichnungssystem gemäß Anspruch 6, 7 oder 8, dadurch gekennzeichnet, daß $R^3$ für Wasserstoff oder tert.-Butyl steht.

10. Optisches Aufzeichnungssystem gemäß Anspruch 1, dadurch gekennzeichnet, daß die Licht absorbierende Schicht aus mindestens einem Farbstoff der Formel

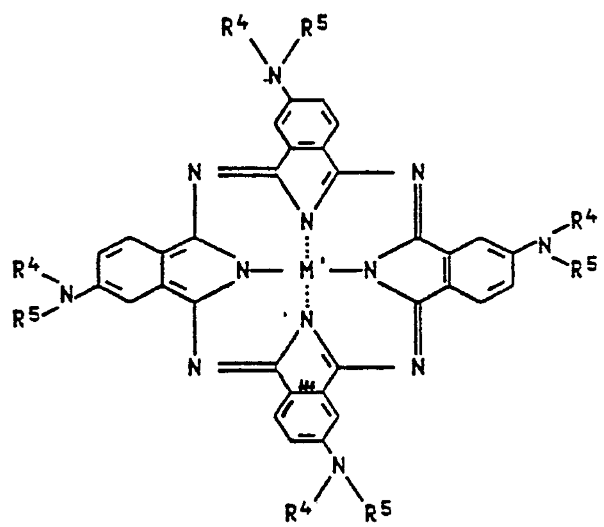

(IIIa)

besteht oder mindestens einen Farbstoff dieser Formel enthält, worin M' für VO, Pb oder TiO und $R^4$ und $R^5$ unabhängig voneinander für $C_1$-bis $C_4$-Alkyl oder

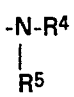

für Pyrrolidino, Piperidino, Morpholino, N-Methyl-piperazino oder N-Ethyl-piperazino stehen.

11. Optisches Aufzeichnungssystem gemäß Anspruch 1, dadurch gekennzeichnet, daß dieses mindestens einen Farbstoff der Formel

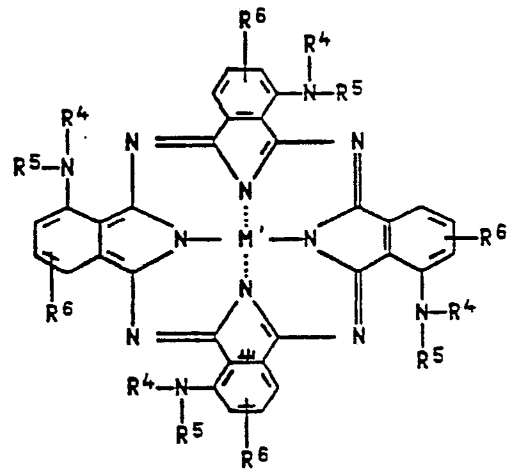

(IIa)

enthält, in der M' fur VO, TiO oder Pb, $R^4$ und $R^5$ unabhängig voneinander für $C_1$- bis $C_4$-Alkyl oder

-N-$R^4$
|
$R^5$

für Pyrrolidino, Piperidino, Morpholino, N-Methyl-piperazino oder N-Ethyl-piperazino und $R^6$ für Wasserstoff oder tert.-Butyl stehen.

**Claims**

1. An optical recording material which consists of a base and a light-absorbing layer which consists of, or contains, one or more dyes of the formula

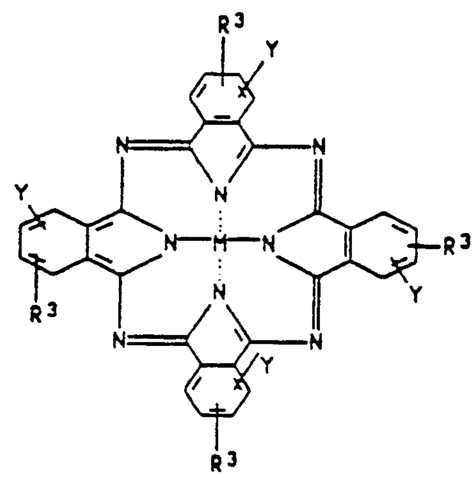

(I)

where M is two hydrogen atoms, Cu, Ni, Pb, VO, TiO, Nb, Ta, Pd, Sn, Cr, Mn, Fe or Co, Y is 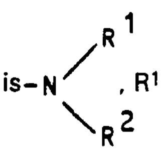 , $R^1$ and $R^2$ independently of one another are each hydrogen, $C_1$-$C_8$-alkyl, phenyl, phenyl-$C_1$-$C_4$-alkyl or $C_1$-$C_8$-alkoxy-$C_2$- or $C_3$-alkyl, or

$R^2$
|
-N-$R^1$

is a saturated 5-membered or 6-membered heterocyclic ring which may contain N, O and/or S as further ring members, and $R^3$ is hydrogen, $C_1$-$C_8$-alkyl, $C_1$-$C_8$-alkoxy-$C_2$- or $C_3$-alkyl, cyclohexyl, phenyl, phenyl-$C_1$-$C_4$-alkyl or

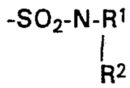

the phenyl radicals in $R^1$, $R^2$ and $R^3$ being unsubstituted or substituted by chlorine, bromine, fluorine, $C_1$-$C_6$-alkyl, $C_1$-$C_6$-alkoxy, $C_1$-$C_8$-alkoxy-$C_2$- or $C_3$-alkyl or $C_1$-$C_8$-alkoxy-$C_2$- or $C_3$-alkoxy and the dye has a high absorption in the range from 650 to 880 nm.

2. An optical recording material as claimed in claim 1, wherein M is VO, TiO, Pb, Cu or Sn.

3. An optical recording material as claimed in claim 1 or 2, wherein $R^1$ and $R^2$ independently of one another are each hydrogen or $C_1$-$C_4$-alkyl, or one of the radicals $R^1$ and $R^2$ may furthermore be phenyl which is unsubstituted or substituted by chlorine, bromine, fluorine, $C_1$-$C_4$-alkyl, $C_1$-$C_4$-alkoxy, $C_1$-$C_4$-alkoxy-$C_2$- or $C_3$-alkyl or $C_1$-$C_4$-alkoxy-$C_2$- or $C_3$-alkoxy, or

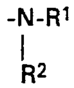

is pyrrolidino, piperidino or N-ethylpiperazino.

4. An optical recording material as claimed in claim 1 or 2 or 3, wherein $R^3$ is hydrogen or tert.-butyl.

5. An optical recording material as claimed in claim 1 or 2 or 4, wherein $R^1$ is hydrogen, methyl, ethyl, isopropyl, isobutyl, tert.-butyl or 2-methoxyethyl, and $R^2$ is hydrogen, methyl, ethyl, isopropyl, isobutyl, tert.-butyl, 2-methoxyethyl, phenyl, 3-methylphenyl or 4-methylphenyl.

6. An optical recording material as claimed in claim 1, wherein the light-absorbing layer consists of, or contains, one or more dyes of the formulae

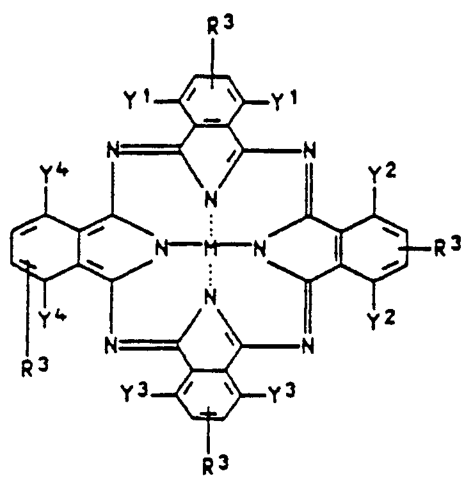

(II)

or

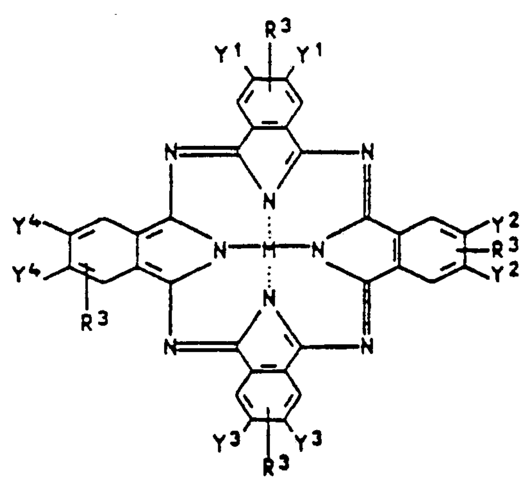

(III)

where in the formulae, one radical $Y^1$, $Y^2$, $Y^3$ and $Y^4$ is

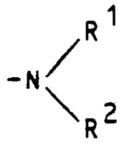

and the other radical $Y^1$, $Y^2$, $Y^3$ and $Y^4$ is hydrogen or $R^3$, and $R^1$, $R^2$, $R^3$ and

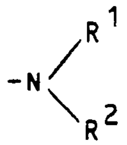

have the meainings given in claim 1.

7. An optical recording material as claimed in claim 6, wherein $R^1$ and $R^2$ independently of one another are each hydrogen or $C_1$-$C_4$-alkyl, or one of the radicals $R^1$ and $R^2$ may furthermore be phenyl which is unsubstituted or substituted by chlorine, bromine, fluorine, $C_1$-$C_4$-alkyl, $C_1$-$C_4$-alkoxy, $C_1$-$C_4$-alkoxy-$C_2$- or $C_3$-alkyl or $C_1$-$C_4$-alkoxy-$C_2$- or $C_3$-alkoxy, or

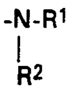

is pyrrolidino, piperidino or N-ethylpiperazino.

8. An optical recording material as claimed in claim 6, wherein $R^1$ is hydrogen, methyl, ethyl, isopropyl, isobutyl, tert.-butyl or 2-methoxyethyl, and $R^2$ is hydrogen, methyl, ethyl, isopropyl, isobutyl, tert.-butyl, 2-methoxyethyl, phenyl, 3-methylphenyl or 4-methylphenyl.

9. An optical recording material as claimed in claim 6 or 7 or 8, wherein $R^3$ is hydrogen or tert.-butyl.

10. An optical recording material as claimed in claim 1, wherein the light-absorbing layer consists of, or contains, one or more dyes of the formula

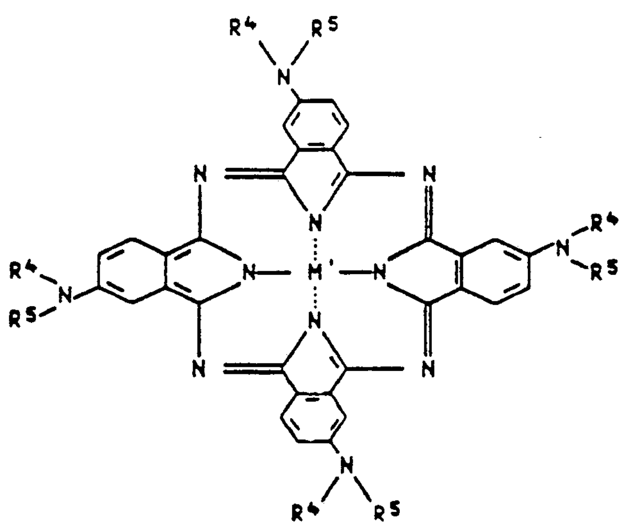

(IIIa)

where M' is VO, Pb or TiO, $R^4$ and $R^5$ independently of one another are each $C_1$-$C_4$-alkyl, or

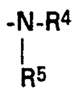

is pyrrolidino, piperidino, morpholino, N-methylpiperazino or N-ethylpiperazino.

11. An optical recording material as claimed in claim 1, which contains one or more dyes of the formula

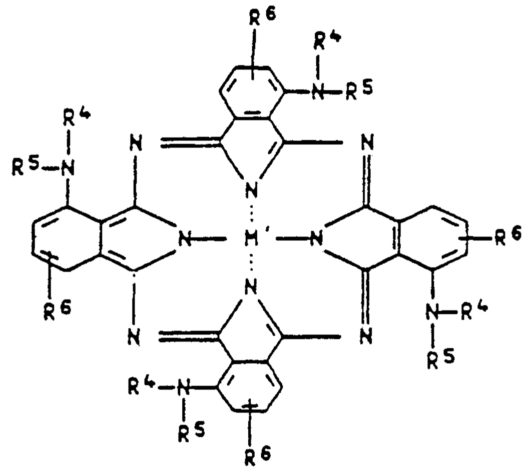

(IIa)

where M' is VO, Pb or TiO, $R^4$ and $R^5$ independently of one another are each $C_1$-$C_4$-alkyl, or

-N-$R^4$
|
$R^5$

is pyrrolidino, piperidino, morpholino, N-methylpiperazino or N-ethylpiperazino and $R^6$ is hydrogen or tert.-butyl.

**Revendications**

1. Milieu d'enregistrement optique composé d'un support et d'une couche absorbant la lumière, caractérisé en ce que la couche absorbant la lumière est constituée d'au moins un colorant de formule

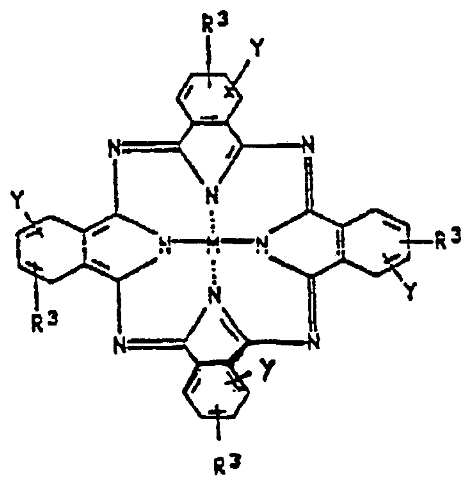

(I)

ou contient au moins un colorant de formule (I), dans laquelle:

M est mis pour deux atomes d'hydrogéne, pour Cu, Ni, VO, TiO, Nb, Ta, pd, Sn, Cr, Mn, Fe ou Co,

Y est mis pour $-N<^{R^1}_{R^2}$ où

$R^1$ et $R^2$ indépendamment l'un de l'autre sont mis pour un atome d'hydrogène ou un groupement alkyle en $C_1$-$C_8$, phényle, phényl-(alkyle en $C_1$-$C_4$) ou (alcoxy en $C_1$-$C_8$)-alkyle en $C_2$-$C_3$, ou

$-N<^{R^1}_{R^2}$

est mis pour un noyau hétérocyclique saturé à 5 ou 6 chaînons, qui contient éventuellement N, O et/ou S comme autres termes cycliques, et

$R_3$ est mis pour un atome d'hydrogène ou un groupement alkyle en $C_1$-$C_8$, (alcoxy en $C_1$-$C_8$)- alkyle en $C_2$-$C_3$, cyclohexyle, phényle, phényl-(alkyle en $C_1$-$C_4$) ou pour

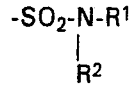

les restes phényle dans $R^1$, $R^2$, $R^3$ pouvant éventuellement être substitués par le chlore, le brome, le fluor, les groupements alkyle en $C_1$-$C_6$, alcoxy en $C_1$-$C_6$, (alcoxy en $C_1$-$C_8$)- alkyle en $C_2$-$C_3$ ou (alcoxy en $C_1$-$C_8$)- alcoxy en $C_2$-$C_3$, et le colorant présente une absorption élevée dans l'intervalle de 650 à 880 nm.

2. Milieu d'enregistrement optique selon la revendication 1, caractérisé en ce que M est mis pour VO, TiO, Fb, Cu ou Sn.

3. Milieu d'enregistrement optique selon la revendication 1 ou 2, caractérisé en ce que $R^1$ et $R^2$ indépendamment l'un de l'autre sont mis pour un atome d'hydrogène ou pour un groupement alkyle en $C_1$-$C_4$ ou l'un des restes $R^1$ ou $R^2$ est mis aussi pour un groupement phényle ou phényle substitué par le chlore, le brome, le fluor, les groupements alkyle en $C_1$-$C_4$, alcoxy en $C_1$-$C_4$, (alcoxy en $C_1$-$C_4$)-alkyle en $C_2$-$C_3$ ou (alcoxy en $C_1$-$C_4$)- alcoxy en $C_2$-$C_3$, ou

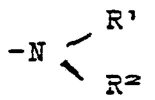

est un groupement pyrrolidino, pipéridino ou N-éthylpipérazino.

4. Milieu d'enregistrement optique selon la revendication 1, 2 ou 3, caractérisé en ce que $R^3$ est mis pour un atome d'hydrogène ou un groupement tert.-butyle.

5. Milieu d'enregistrement optique selon la revendication 1, 2 ou 4, caractérisé en ce que $R^1$ est mis pour un atome d'hydrogène ou un groupement méthyle, éthyle i-propyle i-butyle, tert.-butyle ou 2-méthoxyéthyle et $R^2$ est mis pour un atoms d'hydrogène ou un groupement méthyle, éthyle, i-propyle, i-butyle, tert.-butyle, 2-méthoxy-éthyle, phényle, 3-méthylphényle ou 4-méthylphényle.

6. Milieu d'enregistrement optique selon la revendication 1, caractérisé en ce que la couche absorbant la lumière est constituée d'au moins un colorant de formule

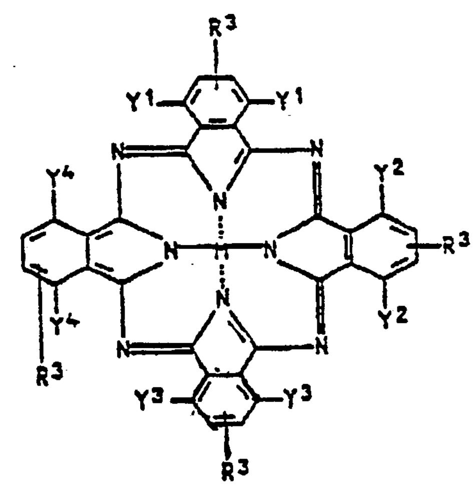

(II)

ou

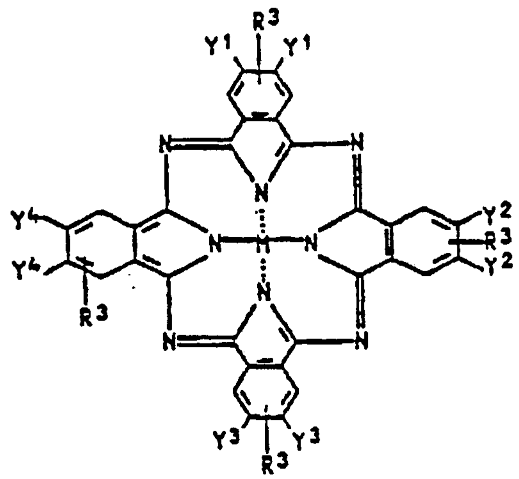

(III)

ou contient au moins un colorant de ces formules, dans lesquelles l'un de $Y^1$, $Y^2$, $Y^3$ et $Y^4$ est mois pour

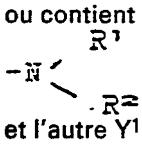

et l'autre $Y^1$, $Y^2$, $Y^3$ et $Y^4$ pour un atome d'hydrogène ou pour $R^3$,

$R^1$, $R^2$, $R^3$ et 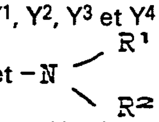

étant tels que définis dans la revendication 1.

7. Milieu d'enregistrement optique selon la revendication 6, caractérisé en ce que $R^1$ et $R^2$ indépendamment l'un de l'autre sont mis pour un atome d'hydrogène ou un groupement alkyle en $C_1$-$C_4$ ou l'un des restes $R^1$ ou $R^2$ est mis aussi pour un groupement phényle ou phényle substitué par le chlore, le brome, le fluor, les groupements alkyle en $C_1$-$C_4$, alcoxy en $C_1$-$C_4$, (alcoxy en $C_1$-$C_4$)-alkyle en $C_2$-$C_3$ ou (alcoxy en $C_1$-$C_4$)-alcoxy en $C_2$-$C_3$, ou bien

$-N-R^1$
|
$R^2$

est un groupement pyrrolodino, pipéridino ou N-éthylpipérazino.

8. Milieu d'enregistrement optique selon la révendication 6, caractérisé en ce que $R^1$ est mis pour un atome d'hydrogène ou un groupement méthyle, éthyle, i-propyle, i-butyle, tert.-butyle ou 2-méthoxyéthyle et $R^2$ pour un atome d'hydrogène ou un groupement méthyle, éthyle, i-propyle, i-butyle, tert,-butyle, 2-méthoxyéthyle, phényle, 3-méthylphényle ou 4-méthylphényle.

9. Milieu d'enregistrement optique selon la revendication 6, 7 ou 8, caractérisé en ce que $R^3$ est mis pour un atome d'hydrogène ou un groupement tert.-butyle.

10. Milieu d'enregistrement optique selon la revendication 1, caractérisé en ce que la couche absorbant la lumière est constituée d'au moins un colorant de formule

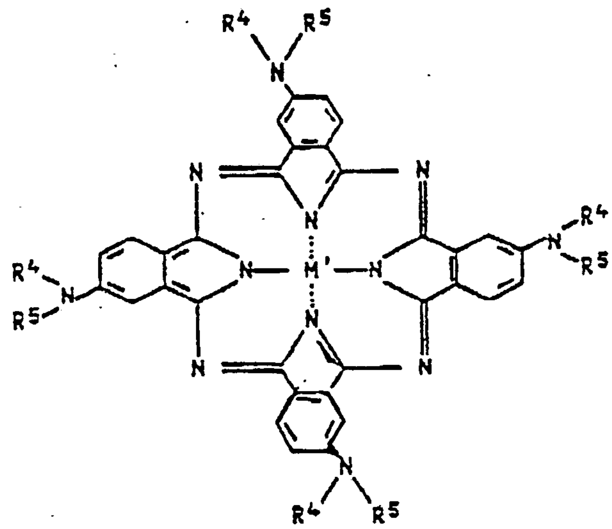

(IIIa)

ou contient au moins un colorant de cette formule, dans laquelle M' est mis pour VO, Pb ou TiO et $R^4$ et $R^5$ indépendamment l'un de l'autre pour un groupement alkyle en $C_1$-$C_4$ ou bien

-N-$R^4$
|
$R^5$

est mis pour un groupement pyrrolidino, pipéridino, morpholino, N-méthylpipérazino ou N-éthylpipérazino.

11. Milieu d'enregistrement optique selon la revendication 1, caractérisé en ce qu'il consient au moins un colorant de formule

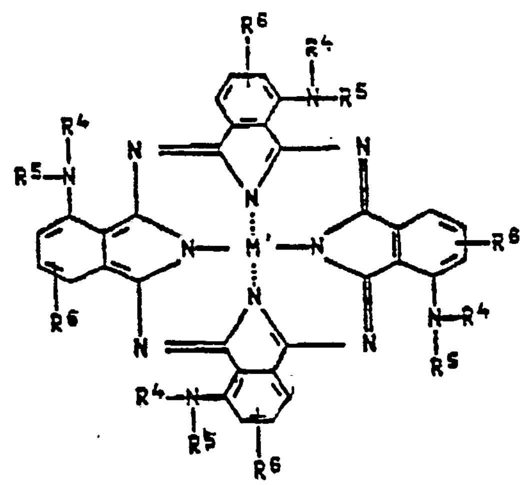

(IIa)

dans laquelle M' est mis pour VO, Fb ou TiO $R^4$ et $R^5$ indépendamment l'un de l'autre pour un groupement alkyle en $C_1$-$C_4$ ou bien

-N-$R^4$
|
$R^5$

est mis pour un groupement pyrrolidino, morpholine, N-methylpipérazino ou N-éthylpipérazino, et $R^6$ est mis pour un atome d'hydrogène ou un groupement tert.-butyle.